# EUROPÄISCHE PATENTANMELDUNG

(11) **EP 0 794 041 A1**
(43) Veröffentlichungstag der Anmeldung: **10.09.1997**
(21) Anmeldenummer: 97103564.7
(22) Anmeldetag: 04.03.1997
(51) Int. Cl.: B26F 1/38, B29C 53/06, B26D 7/27, B32B 35/00, E05D 1/02

(54) **Verfahren zur Herstellung von dreidimensionalen Gegenständen aus Sandwichplatten**

(30) Priorität: 06.03.1996 NL 1002541
(71) Anmelder: Unfolding v.o.f., 3708 AA Zeist (NL)
(72) Erfinder: Poelman, Wilhelmus Anthonius, 3708 AA Zeist (NL); Heukers, Herman-Jan, 3822 VA Amersfoort (NL)
(74) Vertreter: Habbel, Hans-Georg, Dipl.-Ing.

(57) **Zusammenfassung**

Bei einem Verfahren zur Herstellung von dreidimensionalen Gegenständen aus Sandwichplatten, die zwei äußere Lagen (2,3) aus Metall und eine dazwischen angeordnete Lage (1) aus thermoplastischem Kunststoff aufweisen, wobei Biegelinien in der Sandwichplatte vorgesehen sind, entlang derer die Platte abgewinkelt wird, schlägt die Erfindung einen oder mehrere der folgenden Verfahrensschritte zur Vorbehandlung der Sandwichplatte vor:
a) Stanzen einer Sandwichplatte mit einer den herzustellenden Gegenstand ergebenden Umfangskontur aus einer Grundplatte, wobei die Grundplatte zwischen zwei konturgleiche, miteinander fluchtend angeordnete Stanzmesser gebracht wird und wobei die Stanzmesser anschließend zueinander bewegt werden,
b) Einbringen von Biegerillen in die Sandwichplatten, wobei ein beheizter Stempel (4) auf die metallische Lage aufgepreßt wird, wodurch der Kunststoff aufgeschmolzen und seitlich verdrängt wird, bis die beiden metallischen Lagen (2,3) einander anliegen,
c) Entfernen von zwei einander gegenüberliegenden Streifen der beiden äußeren metallischen Lagen zur Erzeugung einer Scharnierlinie, wobei die beiden so entstandenen, einander benachbarten Kanten derselben metallischen Lage zur mittleren Kunststofflage hin abgerundet oder abgeschrägt werden.

## Beschreibung

Die Erfindung betrifft ein Verfahren nach dem Oberbegriff des Anspruches 1.

Aus der US-PS 3 445 052 ist es bekannt, aus einer Sandwichplatte einen dreidimensionalen Behälter zu falten. Der Behälter kann in seine flache Ausgangsposition zurückbewegt werden, da die einzelnen Biegestellen als mehrfach betätigbare Scharnierlinien ausgestaltet sind. Zu diesem Zweck sind die beiden äußeren metallischen Lagen entfernt, so daß der dazwischen freigelegte Kunststoff das Scharnier bildet. Der Behälter, wo die metallische äußere Lage entfernt wurde, um das mittlere Kunststoffmaterial für die Scharnierlinie freizulegen, kann im Kantenbereich scharfkantig ausgebildet sein, so daß Verletzungen bei der Handhabung des Behälters nicht auszuschließen sind.

Aus der US-PS 3 687 170 ist es bekannt, ein Sandwichmaterial zu dreidimensionalen Gegenständen zu verformen. Dabei weist das Sandwichmaterial als mittlere Schicht eine Faserschicht auf und dient als Wärmeisolierung. Die beiden äußeren Lagen des Sandwichmaterials sind auch in den Knickbereichen voneinander beabstandet. Die im Knickbereich innenliegende äußere Lage ist zudem dünner ausgestaltet als die äußere Lage an der Außenseite der Ecke.

Aus der EP 423 073 A1 ist bekannt, in eine Sandwichplatte eine Vielzahl von Biegerillen einzupressen, um insgesamt einen über einen größeren Bereich gebogen verlaufenden Flächenanteil der Verbundplatte zu erzielen. Die Vielzahl einzelner Biegerillen bewirkt eine Welligkeit der Sandwichplatte in dem später insgesamt zu biegenden Bereich. Dabei weist die mittlere Kunststofflage im Bereich der Biegerillen eine geringfügig verringerte Stärke auf. Scharfkantige Knicke, beispielsweise 90°-Knicke sind dabei nicht vorgesehen, sondern vielmehr weitläufig gebogene Flächenbereiche der Sandwichplatte.

Aus der FR-1 260 187 ist es ebenfalls bekannt, Biegerillen in Sandwichplatten mit Hilfe von Stempeln einzupressen. Diese Druckschrift geht davon aus, daß das thermoplastische Material bei einem dreistufigen Biegevorgang während der letzten Stufe verdrängt wird, so daß sich die innere und die äußere metallische Lage einander annähern und fast berühren.

Aus der FR-2 636 255 A1 ist ebenfalls bekannt, Biegerillen in Sandwichmaterial einzupressen und bei größeren Krümmungsradien innerhalb des Gesamtradius eine Vielzahl kleinerer Biegerillen vorzusehen. Bei den Biegerillen für das Biegen von scharfen Kanten sind die beiden äußeren metallischen Lagen der Sandwichplatte auch im Knickbereich voneinander beabstandet.

Aus der FR-2 509 565 A1 ist bekannt, Sandwichplatten zu einem dreidimensionalen Gegenstand zu biegen. Entlang der Biegelinien wird die eine metallische Lage entfernt und die mittlere Kunststofflage bis zur verbleibenden metallischen Lage ebenfalls entfernt. Hierdurch ergibt sich eine erhebliche Materialschwächung im Bereich der Biegelinien.

Bei den bekannten Biegeverfahren zur Herstellung scharfer Kanten ergibt sich in der Praxis häufig das Problem, daß die im Kantenbereich außenliegende äußere metallische Lage aufreißt, wenn zuviel thermoplastisches Material zwischen den beiden äußeren metallischen Lagen verbleibt. Auch in diesem Fall sind Verletzungen der Benutzer der hergestellten Gegenstände im Bereich dieser Kanten nicht ausgeschlossen. Zudem ergibt sich eine erhebliche Materialschwächung im Bereich dieser Kanten, die die Lebensdauer des Gegenstandes unerwünscht herabsetzen kann.

Der Erfindung liegt die Aufgabe zugrunde, einen besonders gebrauchsfreundlichen dreidimensionalen Gegenstand aus einer Sandwichplatte sowie ein Verfahren zu seiner Herstellung und eine Vorrichtung zur Durchführung des Verfahrens anzugeben.

Diese der Erfindung zugrundeliegende Aufgabe wird durch ein Verfahren gemäß Anspruch 1, durch eine Vorrichtung gemäß Anspruch 2 und durch einen Gegenstand gemäß Anspruch 3 gelöst.

Die Erfindung schlägt mit anderen Worten vor, beim Stanzen nicht ein bewegliches Messer an einem feststehenden Block vorbeizuführen, sondern zwei konturgleiche Messer vorzusehen, zwischen denen eine Sandwich-Grundplatte angeordnet wird. Dadurch, daß die beiden Messer zueinander bewegt werden, baut sich auch dann, wenn nur eines der Messer beweglich und das andere feststehend ist, ein nahezu gleicher Druck von beiden Messern auf die beiden äußeren Lagen der Sandwich-Grundplatte auf, so daß die Messer in beide äußeren Lagen der Grundplatte eindringen. Hierdurch wird eine saubere Umfangskontur der auszustanzenden Sandwichplatte erzielt.

Gegenüber den üblichen Stanzen, die für Sandwichplatten Verwendung finden, ergibt sich der Vorteil, daß keine Grate beim Stanzen entstehen. Dies ist einerseits für den Anwender vorteilhaft, da er sich nicht an den Rändern des Gegenstandes verletzen kann, für den Hersteller ist vorteilhaft, daß keinerlei Nachbearbeitung der Stanzränder erforderlich ist und somit eine preiswerte Herstellung unterstützt wird. Zudem können die üblicherweise verwendeten Bandmesser auf preisgünstige Weise für andere Stanzkonturen konfiguriert werden und somit preisgünstig das Stanzen auch kleinerer Serien ermöglichen, während die als Matrize und zugeordnete Patrize ausgebildeten üblichen Stanzen für Sandwichmaterial sehr viel höhere Kosten verursachen und daher nur für größere Stückzahlen rentabel sind.

Bei Biegerillen wird erfindungsgemäß vorteilhaft das Kunststoff mit Material zwischen den beiden äußeren metallischen Lagen vollständig verdrängt, indem ein beheizter Stempel für das Einprägen der Biegerille Verwendung findet. Durch die Beheizung wird das thermoplastische Kunststoffmaterial der mittleren Lage plastisch und kann materialschonend verdrängt werden. Beim Pressen der Biegerillen in kaltem Zustand besteht die Gefahr, daß die dünnen metallischen Lagen aufreißen, insbesondere wenn die mittlere Kunststofflage vollständig verdrängt werden soll, so daß die beiden metallischen äußeren Lagen einander anliegen. Das Aufreißen einer solchen äußeren metallischen Lage stellt eine unerwünschte Materialschwächung dar, die die Festigkeit des herzustellenden Behälters beeinträchtigt. Zudem kann die aufgerissene metallische Lage für den späteren Benutzer des Gegenstandes eine Verletzungsgefahr darstellen.

Werden jedoch die Biegerollen so schwach ausgebildet, daß sie sich nicht durch die ganze Tiefe der mittleren Kunststofflage erstrecken, daß also die beiden metallischen Lagen sich nicht gegenseitig berühren, so kann beim Biegen der Sandwichplatte entlang der Biegerille ein Riß im Material der Außenkante auftreten, da hier sehr hohe Zugspannungen im Material auftreten können. Daher ist erfindungsgemäß vorteilhaft vorgesehen, die Biegerille so tief in die Sandwichplatte einzupressen, daß sich beide äußeren metallischen Lagen berühren, daß also die mittlere thermoplastische Lage vollständig unterbrochen wird und das thermoplastische Material im Bereich der Biegelinie vollständig verdrängt wird. Durch die gleichzeitige Erwärmung kann eine sanfte und materialschonende Verdrängung dieses thermoplastischen Materials erfolgen, ohne daß es allein schon durch das Verdrängen des Materials, also vor dem Biegen der Sandwichplatte, zu Rissen in den äußeren beiden metallischen Lagen kommen kann.

Beim Herstellen von Scharnierlinien werden vorteilhaft die Übergänge von der äußeren metallischen Lage zu dem freigelegten Kunststoffstreifen sanft abgeschrägt oder abgerundet, so daß auch hier eine Verletzungsgefahr für den Benutzer des Gegenstandes ausgeschlossen ist. Da die streifenförmige Entfernung der äußeren metallischen Lage üblicherweise spanabhebend erfolgt, besteht ohne eine derartige Nachbehandlung der Kanten der metallischen äußeren Lagen die Gefahr, daß sich Grate bilden, die den Benutzer des Gegenstandes verletzen können.

Bei der erfindungsgemäß verwendeten Stanze können die Querschnitte der Messe vorteilhafterweise von ihrer Schnittlinie aus immer breiter werden. Hierdurch vergrößert sich der Eindringwiderstand der Messer in die Sandwichgrundplatte. Hierdurch wiederum wird gewährleistet, daß nicht ausschließlich ein einziges Messer in eine einzige Oberfläche der Sandwich-Grundplatte eindringt, sondern daß die Grundplatte in der gewünschten Weise von beiden Seiten gestanzt wird. Durch dieses beidseitige Stanzen werden die beiden metallischen äußeren Lagen im Bereich der Stanzlinie nach innen abgebogen, so daß eine automatische Abrundung der äußeren metallischen Lagen im Bereich der Stanzlinie erfolgt und damit eine benutzerfreundliche verletzungsarme Kantengestaltung erzielt wird.

Der sich zunehmend vergrößernde Eindringwiderstand ermöglicht zudem eine besonders einfache Maschinensteuerung, indem bei einem vorgegebenen Druck die Bewegung des einen oder beider Messer gestoppt wird. Auf diese Weise kann mit einfachen Mitteln verhindert werden, daß die Schneiden der beiden Stanzmesser gegeneinanderschlagen und vorschnell verschleißen.

Die erfindungsgemäß hergestellten Gegenstände können besonders einfach, zeitsparend und kostensparend hergestellt werden, wenn sie sowohl Biegerillen als auch Scharnierlinien aufweisen. Auf diese Weise sind komplexe, dreidimensionale Gegenstände mit vielfältigster Funktionalität einfach und preisgünstig herstellbar.

Insbesondere wenn der Gegenstand ein gebogenes Flächenelement aufweist, sind damit die unterschiedlichsten Gegenstände des täglichen Bedarfs herstellbar: Bei einer Hülle für Videokassetten kann der gebogene Flächenbereich ähnlich einem Buchrücken ausgestaltet sein. An diesen 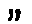 Rücken" der Kassettenhülle schließen sich zwei Scharnierlinien an, die das wiederholte Öffnen und Schließen der Kassettenhülle ermöglichen. Die Kassette kann geschützt und fixiert werden, indem gegenüber der Vorderseite und der Rückseite der Kassettenhülle abgewinkelte Bereiche entlang der Schmalseite der Kassettenhülle vorgesehen sind. Diese dauerhaft abgewinkelten Bereiche können an die Vorder- bzw. Rückseite der Kassettenhülle über die erfindungsgemäßen Biegelinien anschließen.

Die Erfindung wird anhand der nachfolgenden, rein beispielhaften Zeichnungen näher erläutert:
- Fig. 1: zeigt das Herstellen einer Biegerille,
- Fig. 2: zeigt eine Stanze,
- Fig. 3: zeigt einen Ausschnitt der Stanze von Fig. 2 in gegenüber Fig. 2 vergrößertem Maßstab und
- Fig. 4: zeigt einen dreidimensionalen Gegenstand.

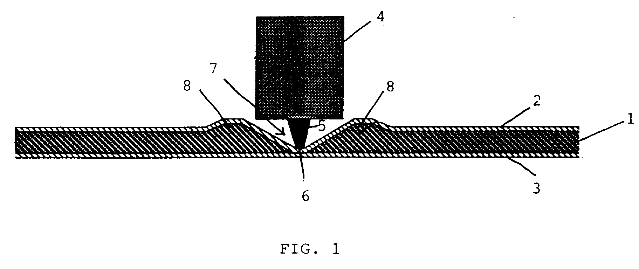

In Fig. 1 ist eine Sandwichplatte dargestellt, die aus einer mittleren thermoplastischen Lage 1 und zwei äußeren metallischen Lagen 2 und 3 aufgebaut ist, wobei die thermoplastische Lage 1 aus einem Kunststoff und die beiden Lagen 2 und 3 aus Aluminium bestehen können.

Ein Prägestempel 4 ist über der oberen Lage 2 dargestellt. Der Prägestempel 4 weist einen Prägekopf 5 auf, der nicht spitz ausgestaltet ist, sondern eine flache oder schwach gebogene Unterseite 6 aufweist, um Einschnitte in die Lage 2 und die thermoplastische Lage 1 auszuschließen.

Der Prägekopf 5 ist beheizt und wird mit einer Temperatur von beispielsweise 200 bis 300° C auf die Sandwichplatte aufgepreßt. Die gute Wärmeleitung der oberen metallischen Lage 2 bewirkt, daß die thermoplastische Lage 1 erwärmt wird. Durch den Prägedruck findet eine plastische Verformung des Kunststoffmaterials der thermoplastischen Lage 1 statt, wobei auch die obere metallische Lage 2 verformt wird. Auf diese Weise wird eine Nut 7 in der Sandwichplatte geformt, die als Biegerille zum späteren Biegen der Sandwichplatte genutzt werden kann. An die Nut 7 schließen sich beidseitig Erhebungen 8 an aufgrund der dorthin verdrängten Masse des Materials der thermoplastischen Lage 1.

Die Kontur der Erhebungen 8 in Fig. 1 ist rein beispielhaft gewählt. Sie hängt von der Heiztemperatur des Prägekopfes 5, von der Breite der Unterseite 6 des Prägekopfes 5, vom Prägedruck und der Prägegeschwindigkeit ab sowie von den verwendeten Materialien und Schichtdicken der Sandwichplatte.

Da das Material der thermoplastischen Lage 1 im Bereich der Biegerille nahezu vollständig seitlich verdrängt wird, ergibt sich ein Kontakt zwischen den beiden Lagen 2 und 3 im Bereich der Biegerille. Die Dicke der Sandwichplatte wird im Bereich der Biegelinie erheblich reduziert, so daß beim Umbiegen der Platte entlang der Biegerille keine unzulässigen Zugspannungen in das Material der beiden metallischen Lagen 2 und 3 eingeleitet werden, so daß die metallischen Lagen 2 und 3 nach dem Biegen unversehrt bleiben. Da die beiden metallischen Lagen ohnehin die Festigkeit der Sandwichplatte maßgeblich bestimmen, wird durch die Biegelinie die Materialstabilität nur unwesentlich beeinträchtigt, so daß bei dem gebogenen, dreidimensional verformten Gegenstand hervorragende Festigkeitswerte und eine Konturstabilität dieses Gegenstandes erzielbar ist.

Erst nach dem Einbringen der Biegerillen wird die später zu verformende Sandwichplatte aus einer Grundplatte herausgestanzt. So wird sichergestellt, daß die Sandwichplatte die gewünschte Kontur erhält, die zur Schaffung des dreidimensionalen Gegenstandes erforderlich ist.

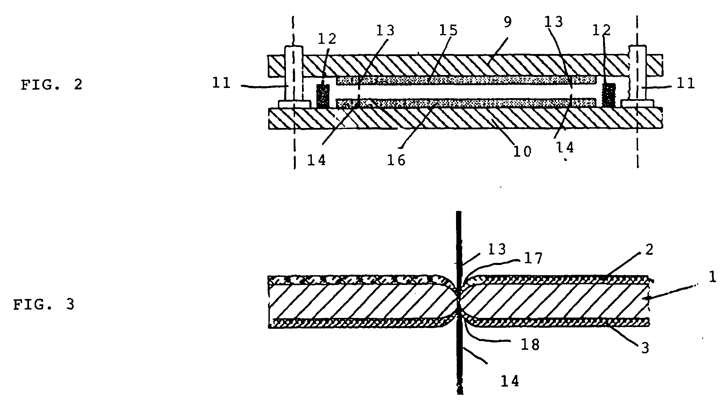

Fig. 2 zeigt eine Stanzvorrichtung, die eine obere Platte 9 und eine untere Platte 10 umfaßt. Führungsstifte 11, die an der unteren Platte 10 befestigt sind, führen die obere Platte 9, so daß die obere Platte 9 exakt an die untere Platte 10 angenähert werden kann.

Die untere Platte 10 weist Anschläge 12 auf, welche die Annäherung der oberen Platte 9 an die untere Platte 10 begrenzen. Die Anschläge 12 können Mittel zur Höhenverstellung aufweisen, so daß die minimal erreichbare Distanz zwischen den beiden Platten 9 und 10 an die jeweiligen Betriebsverhältnisse anpaßbar ist. Mit 13 und 14 sind jeweils sogenannte Bandmesser der Oberplatte 9 und der Unterplatte 10 bezeichnet. Die Bandmesser 13 und 14 verlaufen entsprechend der Kontur der auszustanzenden Sandwichplatte und sind miteinander fluchtend angeordnet, so daß also die beiden Schneidkanten der Bandmesser 13 und 14 genau voreinander stehen.

Die Bandmesser 13 und 14 sind in Stützplatten 15 und 16 angeordnet, die Verformungen der Bandmesser 13 und 14 verhindern und somit die Konturengenauigkeit sicherstellen.

Zum Stanzen werden zunächst die oberen und unteren Bandmesser 13 und 14 auf die gewünschte Kontur der auszustanzenden Sandwichplatte eingestellt. Anschließend wird die Grundplatte, aus der die später zu verwendende Sandwichplatte ausgestanzt werden soll, zwischen den Bandmessern 13 und 14 angeordnet. Anschließend wird die obere Platte 9 abgesenkt, bis sie den Anschlägen 12 anliegt. Der dabei auf beide Oberflächen der Sandwichplatte einwirkende Druck bewirkt, daß nicht nur das bewegliche obere Bandmesser 13 in die obere äußere metallische Lage 2 eindringt, sondern daß durch den Gegendruck auch das untere Bandmesser 14 in die untere metallische Lage 3 der Sandwichplatte eindringt.

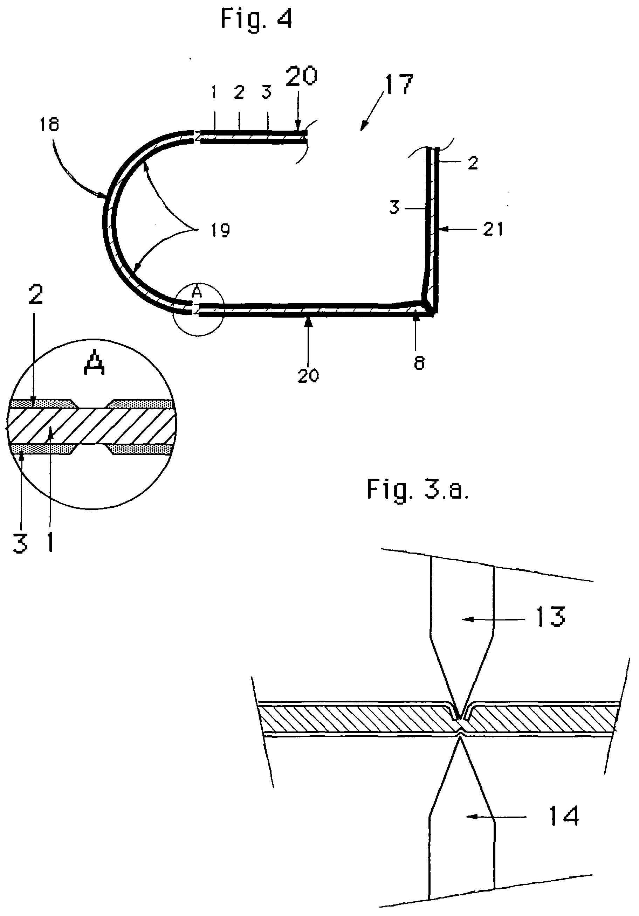

Fig. 3 zeigt die Sandwichplatte während des Stanzvorganges. Eine der beiden Lagen 2 bzw. 3 wird durch die auftretenden Kräfte der Bandmesser 13 bzw. 14 so stark verformt, daß ein Bruch auftritt. Die jeweils andere äußere Lage 2 bzw. 3 bricht ebenfalls aufgrund der Tatsache, daß die Querschnitte der Bandmesser 13 und 14 sich von der Schneidkante her erweitern. Hierdurch wird ein zunehmender Eindringwiderstand für die Messer 13 und 14 sichergestellt, so daß ein zunehmender Druck auf die Sandwichplatte ausgeübt wird, der schließlich zum Eindringen des jeweils anderen Messers führt.

Die Anschläge 12 sind so justiert, daß die beiden Schneidkanten der Bandmesser 13 und 14 im Abstand voneinander verbleiben, so daß die Messer 13 und 14 sich nicht gegenseitig beschädigen können. Fig. 3a zeigt in gegenüber Fig. 3 vergrößertem Maßstab die beiden Messer 13 und 14, insbesondere im Bereich ihrer beiden Schneidkanten während der Endphase des Stanzvorganges: Die Messer 13 und 14 fluchten miteinander, so daß die beiden Schneidkanten genau voreinander liegen. Der am Ende des Schneidvorganges verbleibende Zwischenraum zwischen den beiden Messern 13 und 14 stellt eine derartige Materialschwächung der thermoplastischen Lage 1 der Sandwichplatte dar, so daß der ausgestanzte Bereich leicht aus der Sandwich-Grundplatte herausgelöst werden kann und als planes Produkt ausgeliefert werden kann. Hierdurch kann ein erheblicher ökonomischer und ökologischer Vorteil erzielt werden, da die Produkte im planen Zustand ausgeliefert werden können und erst später zu den dreidimensionalen Gegenständen verformt werden können.

Entlang der Stanzlinie weist die Sandwichplatte keinen Grat auf, sondern benutzerfreundlich abgerundete Kanten, die Verletzungsgefahren ausschließen und keinerlei Nachbearbeitung erfordern.

Die dargestellte Stanzvorrichtung ist preisgünstig: Die Bandmesser selbst sind preisgünstig und können durch Verwendung unterschiedlicher Stützplatten 15 und 16 jeweils neu angeordnet werden, um unterschiedliche Konturen von Sandwichplatten zu ermöglichen. Die aufwendige Herstellung von Matrizen und Patrizen wie beim herkömmlichen Stanzen kann entfallen. Als Stützplatten 15 und 16 können leicht zu bearbeitende Materialien, wie beispielsweise Kunststoff, Verwendung finden, solange diese Materialien eine ausreichend exakte Positionierung der Bandmesser 13 und 14 sicherstellen. Diese Materialien können durch das Einfräsen von Nuten die Kontur der auszustanzenden Sandwichplatte vorbestimmen.

Abweichend von dem dargestellten Ausführungsbeispiel kann vorgesehen sein, anstelle der Anschläge 12 eine hydraulische oder pneumatische oder ähnliche Steuerung vorzusehen. Der zunehmende Eindringwiderstand der Bandmesser 13 und 14 kann dazu führen, daß die Stanze bei Erreichen eines vorbestimmten Druckwertes angehalten wird, um eine Beschädigung der Schneidkanten der Messer 13 und 14 zu vermeiden und den Stanzprozeß in der gewünschten Endstellung zu beenden.

In Fig. 4 ist schematisch und lediglich ausschnittsweise ein Querschnitt durch einen Gegenstand dargestellt, der erfindungsgemäß hergestellt worden ist: Die Zeichnung zeigt eine Videokassettenhülle 17, die aus einer Sandwichplatte hergestellt ist. Die Sandwichplatte umfaßt die mittlere thermoplastische Lage 1 sowie die beiden äußeren metallischen Lagen 2 und 3. Ein Bereich der Sandwichplatte ist zu einer Art Buchrücken 18 gebogen verformt.

An den Buchrücken 18 schließen sich zwei Scharnierlinien 19 an, wobei im Bereich dieser beiden Scharnierlinien 19 die beiden äußeren Lagen 2 und 3 entfernt worden sind, z. B. durch Fräsen, Radieren oder ähnliche Verfahren. Die Kanten der äußeren metallischen Lagen 2 und 3 sind im Bereich der Scharnierlinien 19 schräg verlaufend. Der Verlauf dieser Kanten kann durch die Kontur des Fräskopfes bestimmt werden.

Abweichend von dem dargestellten Ausführungsbeispiel sind auch gebogene Kanten oder ähnliche Ausgestaltungen denkbar. Wesentlich ist, daß keine rechtwinklige, scharfkantige Kante zwischen der äußeren metallischen Lage 2 bzw. 3 einerseits und der im Bereich der Scharnierlinien 19 freiliegenden thermoplastischen Lage 1 vorgesehen ist. Hierdurch werden Grate oder scharfkantige Ecken vermieden, die beim Benutzer zu Verletzungen führen könnten.

Die dargestellte Videokassettenhülle 17 kann also ähnlich wie ein Buch aufgeklappt werden, wobei zwei Deckelflächen 20, die die Vorder- und Rückseite der Videokassettenhülle bilden, gegenüber dem Buchrücken 18 um die Scharnierlinien 19 verschwenkt werden können.

Um die Videokassette auch bei geschlossener Videokassettenhülle 17 wie im dargestellten Ausführungsbeispiel, sicher zu halten, sind umlaufend an den Schmalseiten der Videokassettenhülle 17 Seitenflächen 21 vorgesehen, von denen nur eine derartige Seitenfläche 21 beispielhaft dargestellt ist. Die Seitenfläche 21 ist gegenüber der zugehörigen unteren Deckelfläche 20 abgewinkelt mittels einer Biegerille, wie sie gemäß Fig. 1 erzeugt worden ist. Gegenüber den Scharnierlinien 19, die mehrfach hin- und herbeweglich ausgestaltet sind, stellt die Biegelinie zwischen der Deckelfläche 20 und der Seitenfläche 21 eine stabile Position der beiden Flächen 20 und 21 sicher.

Insgesamt wird durch die Anwendung des Biegevorganges für den Buchrücken 18, durch die Ausgestaltung der Scharnierlinie 19 und durch die Ausgestaltung der Biegerille ein Produkt ermöglicht, welches aus einem einzigen Materialstück gefertigt ist, leichtgewichtig ist und eine komplexe dreidimensionale Gestaltung und Funktionalität aufweisen kann. Auch solche Produkte, wie der in Fig. 4 dargestellte Gegenstand, können zunächst als plane Sandwichplatte platzsparend ausgeliefert werden, wobei lediglich die Ausgestaltung des Buchrückens 18 bereits werkselig erfolgt sein kann.

Die Sandwichplatte kann in ihrem planen Zustand problemlos an beliebigen Flächen textlich oder graphisch gestaltet werden (z.B. bedruckt, geätzt, geprägt oder beklebt), da sämtliche Bereiche der Sandwichplatte optimal zugänglich sind. Auch hierdurch werden die Herstellungskosten des dreidimensionalen Gegenstandes niedrig gehalten, ebenso wie durch die niedrigeren Transportkosten, die durch die Auslieferung im planen Zustand möglich sind, und ebenso wie durch die Möglichkeit, einen komplexen Gegenstand aus einer einzigen Sandwichplatte ohne zusätzliche Bauteile zu schaffen.

## Patentansprüche

1. Verfahren zur Herstellung von dreidimensionalen Gegenständen aus Sandwichplatten, die zwei äußere Lagen aus Metall und eine dazwischen angeordnete Lage aus thermoplastischem Kunststoff aufweisen, wobei Biegelinien in der Sandwichplatte vorgesehen sind, entlang derer die Platte abgewinkelt wird,
gekennzeichnet durch einen oder mehrere der folgenden Verfahrensschritte zur Vorbehandlung der Sandwichplatte:
a) Stanzen einer Sandwichplatte mit einer den herzustellenden Gegenstand ergebenden Umfangskontur aus einer Grundplatte, wobei die Grundplatte zwischen zwei konturgleiche, miteinander fluchtend an geordnete Stanzmesser (13, 14) gebracht wird und wobei die Stanzmesser (13, 14) anschließend zueinander bewegt werden,
b) Einbringen von Biegerillen in die Sandwichplatten, wobei ein beheizter Stempel (4) auf die metallische Lage (2) aufgepreßt wird, wodurch der Kunststoff aufgeschmolzen und seitlich verdrängt wird, bis die beiden metallischen Lagen (2, 3) einander anliegen,
c) Entfernen von zwei einander gegenüberliegenden Streifen der beiden äußeren metallischen Lagen (2, 3) zur Erzeugung einer Scharnierlinie (19), wobei die beiden so entstandenen, einander benachbarten Kanten derselben metallischen Lage (2, 3) zur mittleren Kunststofflage (1) hin abgerundet oder abgeschrägt werden.

2. Vorrichtung zur Durchführung des Verfahrens nach Anspruch 1, dadurch gekennzeichnet, daß die zum Stanzen verwendeten Messer (13, 14) einen von ihrer Schnittkante aus breiter werdenden Querschnitt aufweisen.

3. Nach dem Verfahren von Anspruch 1 hergestellter Gegenstand, dadurch gekennzeichnet, daß er sowohl Biegerillen als auch Scharnierlinien (19) aufweist.

4. Gegenstand nach Anspruch 3, dadurch gekennzeichnet, daß er einen dreidimensional gebogen verformten Flächenanteil (Buchrücken 18) aufweist.
